# EUROPÄISCHE PATENTANMELDUNG

(11) **EP 0 806 399 A1**
(43) Veröffentlichungstag der Anmeldung: **12.11.1997**
(21) Anmeldenummer: 96107442.4
(22) Anmeldetag: 10.05.1996
(51) Int. Cl.: C02F 1/44, C02F 1/28, C02F 3/02, C02F 9/00, B01D 61/02

(54) **Verfahren und Vorrichtung zur Reinigung von Abwasser**

(71) Anmelder: WEHRLE-WERK AG, D-79312 Emmendingen (DE)
(72) Erfinder: Wagner, Friedrich, Dr.-Ing., 79194 Heuweiler (DE); Wienands, Hubert, Dipl.-Ing, 79312 Emmendingen (DE)
(74) Vertreter: Patentanwälte Leinweber & Zimmermann

(57) **Zusammenfassung**

Ein Verfahren und eine Vorrichtung zur Reinigung von Abwasser weist eine zur Abtrennung der Abwasserinhaltsstoffe dienende Nanofiltrationseinrichtung (19) auf, deren Retentatstrom (20) im Kreislauf (15, 16, 17, 18) zurückgeführt wird, um eine Aufkonzentrierung der Inhaltsstoffe zu bewirken. Aus dem Kreislauf wird Konzentrat (29) entnommen und einer Einrichtung (31) zur physikalischen und/oder chemischen Behandlung zugeführt. Mindestens ein Teil des behandelten Konzentrats (47) wird in den Kreislauf der Nanofiltrationseinrichtung (19) zurückgespeist.

## Beschreibung

Die Erfindung bezieht sich auf ein Verfahren zur Reinigung von Abwasser, bei dem das Abwasser in einen Kreislauf einer Filtereinrichtung eingespeist wird, in dem das Retentat der Filtereinrichtung zu deren Eingang zurückgeführt und dadurch in diesem Filterkreislauf ein Konzentrat eingestellt wird, und bei dem aus dem Filterkreislauf Konzentrat entnommen sowie einer zur physikalischen und/oder chemischen Behandlung dienenden Einrichtung zugeführt wird, sowie auf eine zur Durchführung dieses Verfahrens geeignete Einrichtung.

Bei einem derartigen bekannten Verfahren (EP 0 503 649 A1) wird das der physikalischen und/oder chemischen Behandlung unterzogene Konzentrat in einen der Filtereinrichtung vorgeschalteten Bioreaktor eingespeist, dem auch das zu behandelnde Abwasser zum Zwecke biologischer Reinigung aufgegeben wird. Dieses bekannte Verfahren läßt bereits sehr gute Reinigungsergebnisse erwarten.

Demgegenüber ist es ein Ziel der Erfindung, ein Verfahren der eingangs genannten Art dahingehend weiterzubilden, daß der Wirkungsgrad noch einmal gesteigert wird, sowie eine zur Durchführung dieses Verfahrens geeignete Vorrichtung anzugeben.

Erfindungsgemäß wird diese Aufgabe hinsichtlich des Verfahrens dadurch gelöst, daß mindestens ein Teil des behandelten Konzentrats aus der zur physikalischen und/oder chemischen Behandlung dienenden Einrichtung in den Filterkreislauf zurückgespeist wird.

Besonders vorteilhaft erweist sich das erfindungsgemäße Verfahren gegenüber EP 0 503 649, wenn das behandelte Konzentrat nur noch geringfügig oder nicht mehr mit biologisch zugänglichen Inhaltsstoffen belastet ist bzw. im Konzentrat Stoffe enthalten sind, die sich im Bioreaktor akkumulieren (refraktäre Stoffe).

Die unmittelbare Rückführung des behandelten Konzentrates vor die Filtereinrichtung entlastet damit die biologische Reinigungsstufe hydraulisch und vermeidet die Akkumulation refraktärer Stoffe.

Ein weiterer Vorteil besteht darin, daß organisch geringer belastete Abwässer auch ohne biologische Behandlungsstufe mit dem erfindungsgemäßen Verfahren wirkungsvoll gereinigt werden können.

Durch die bei dem erfindungsgemäßen Verfahren erfolgende Konzentratbildung im Kreislauf der Filtereinrichtung werden die schädlichen Abwasserinhaltsstoffe so weit aufkonzentriert, daß sie mittels der chemischen und/oder physikalischen Behandlung wirkungsvoll entnommen bzw. umgesetzt oder in veränderte Form überführt werden können, in der sie auf einfache Weise ausgeschleust werden können. Diese Aufkonzentrierung und Entfernung der Abwasserinhaltsstoffe ist dabei insbesondere unabhängig von einer biologischen Vorbehandlung.

Wegen der Konzentrationsabhängigkeit der in Abwasseranlagen ablaufenden physikalischen und chemischen Reaktionen ergeben sich lange Reaktionszeiten oder die Notwendigkeit eines hohen Überschusses an Chemikalien, wenn zur Erfüllung des geforderten Reinigungsziels im Reaktionsraum niedrige Restkonzentrationen an Abwasserinhaltsstoffen eingestellt werden. Bei dem erfindungsgemäßen Verfahren ist diese nachteilige Kopplung zwischen dem Reinigungsziel und der Reaktionskinetik aufgehoben, indem das Rückhaltevermögen der Filtereinrichtung für bestimmte Stoffe dazu benutzt wird, sehr weitgehend gereinigtes Wasser als Permeat der Filtereinrichtung zu erhalten, dessen Qualität weitgehend unabhängig von Vorbehandlungsstufen oder der Behandlung des Konzentrats ist. Durch die Aufkonzentrierung der in dem Konzentrat zurückgehaltenen Inhaltsstoffe findet in der zur physikalischen und/oder chemischen Behandlung dienenden Einrichtung die Umwandlung dieser Inhaltsstoffe mit hohen Reaktionsgeschwindigkeiten besonders effizient statt, so daß dort die Umwandlung und Abtrennung der Inhaltsstoffe äußerst wirkungsvoll erfolgt.

Von besonderem Vorteil ist es, die Aufkonzentrierung durch Filtration in einer Membranfiltereinrichtung, vorzugsweise einer Nanofiltereinrichtung, auszuführen. Dadurch wird ein nahezu vollständiger Rückhalt organischer Inhaltsstoffe sowie ein teilweiser Rückhalt mehrwertiger Ionen erreicht, so daß mit dem Permeat lediglich niedermolekular gelöste Inhaltsstoffe, vor allem Salze, ausgetragen werden. Der Rückhalt und der Austrag lassen sich durch geeignete Gestaltung der Filtereinrichtung und der zur physikalischen und/oder chemischen Behandlung dienenden Einrichtung variieren. Der Rückhalt anorganischer Inhaltsstoffe wird durch die stoffspezifische Wirksamkeit der zur physikalischen und/oder chemischen Behandlung dienenden Einrichtung begrenzt, mit deren Hilfe diese Stoffe aus dem Konzentrat entnommen werden.

Eine besonders hohe Reinigungswirkung wird erreicht, wenn die Aufkonzentrierung in mehreren hintereinandergeschalteten Membranfiltereinrichtungen, vorzugsweise Nanofiltereinrichtungen, ausgeführt wird.

Als besonders wirkungsvoll hat es sich erwiesen, das Konzentrat in der zur physikalischen und/oder chemischen Behandlung dienenden Einrichtung mit einem Adsorptionsmittel und/oder einem Oxidationsmittel und/oder einem Flockungsmittel und/oder einem Fällungsmittel und/oder einem Ionenaustauschmittel zu behandeln. Der dadurch entstehende Adsorptions-, Flockungs-, Fällungs- bzw. Ionenaustauschschlamm bzw. - granulat, in dem die Inhaltsstoffe des Konzentrats gebunden sind, kann dadurch wirkungsvoll in der zur physikalischen und/oder chemischen Behandlung dienenden Einrichtung entfernt werden. Auf diese Weise ist es möglich, im zu reinigenden Abwasser gelöste oder dispergierte persistente Stoffe, bei denen es sich beispielsweise um organische Stoffe, aber auch um Schwermetalle und mehrwertige Ionen handeln kann, aufzukonzentrieren und die Flüssigphase für die weitere Behandlung in die Filtereinrichtung zurückzugeben sowie diese schädlichen Inhaltsstoffe in eine abscheidbare Form überzuführen und dadurch dem zu reinigenden Abwasser zu entziehen.

In einer zweckmäßigen Ausführungsform des erfindungsgemäßen Verfahrens wird der Abscheidungswirkungsgrad der zur physikalischen und/oder chemischen Behandlung dienenden Einrichtung derart eingestellt, daß durch den zurückgespeisten Teil der Konzentrationsgrad im Filterkreislauf einen gewünschten Wert nicht überschreitet. Alternativ kann die Menge des in den Filterkreislauf zurückgespeisten Teils derart eingestellt werden, daß durch ihn der Konzentrationsgrad im Filterkreislauf einen gewünschten Wert nicht überschreitet. Durch diese Steuerung kann das in der zur physikalischen und/oder chemischen Behandlung dienenden Einrichtung behandelte Konzentrat unmittelbar wieder der Filtereinrichtung zugeführt werden. Die Überwachung der Beschaffenheit des Konzentrats erfolgt zweckmäßigerweise kontinuierlich durch Leitfähigkeitsbestimmung, Trübungsmessung oder eine Analysatorvorrichtung.

Die Aufkonzentrierung des Konzentrats im Filterkreislauf sowie die physikalische und/oder chemische Behandlung des Konzentrats kann diskontinuierlich oder kontinuierlich erfolgen. Von besonderem Vorteil ist die kontinuierliche Aufkonzentrierung sowie die kontinuierliche physikalische und/oder chemische Behandlung des dem Filterkreislauf entnommenen Konzentrats, was insbesondere bei der Verwendung mehrerer hintereinandergeschalteter Filtereinrichtungen von Vorteil ist.

Zum Regenerieren der für die Aufkonzentrierung vorgesehenen Filtereinrichtung werden vorzugsweise Spülintervalle vorgesehen.

Eine erfindungsgemäß ausgebildete Vorrichtung zur Reinigung von Abwasser weist eine Filtereinrichtung auf, an die ein der Rückführung ihres Retentats zu ihrem Eingang und dadurch zur Einstellung eines Konzentrats dienender Filterkreislauf angeschlossen ist, in den das Abwasser eingespeist wird, sowie eine zur physikalischen und/oder chemischen Behandlung dienende Einrichtung, die mit einem Eingang an den Filterkreislauf angeschlossen ist, wobei ein mindestens einen Teil des behandelten Konzentrats abführender Ausgang der zur physikalischen und/oder chemischen Behandlung dienenden Einrichtung an den Filterkreislauf angeschlossen ist.

Durch den unterschiedlichen Rückhalt der Abwasserinhaltsstoffe in der Filtereinrichtung, die insbesondere eine Membranfiltereinrichtung, besonders vorteilhaft eine Nanofiltereinrichtung, ist, werden die Reaktionszeiten der jeweiligen Inhaltsstoffe bei der physikalischen und/oder chemischen Behandlung voneinander entkoppelt. Damit lassen sich die Reaktionszeiten der jeweiligen Substanzen an den zu ihrem Abbau bis zu den gewünschten Minimalkonzentrationen erforderlichen Zeitbedarf individuell anpassen.

Vorzugsweise weist die zur physikalischen und/oder chemischen Behandlung dienende Einrichtung eine zur Abtrennung von Inhaltsstoffen des Konzentrats dienende Adsorptionseinrichtung und/oder Flockungseinrichtung und/oder Fällungseinrichtung und/oder einen Ionenaustauscher auf. Hierbei wird das Konzentrat beispielsweise in einem Reaktionsbehälter adsorptiv, etwa mit Aktivkohle oder Bentonit oder mit einem Flockungs- und/oder Fällungsmittel oder ionenselektiv mittels eines Ionenaustauschmittels, gebunden und aus der physikalischen und/oder chemischen Behandlungsstufe entfernt.

Das erfindungsgemäße Verfahren und die erfindungsgemäße Vorrichtung sind gewerblich vor allem zur Reinigung von mit biologisch schwer oder nicht abbaubaren Inhaltsstoffen belasteten Abwässern anwendbar.

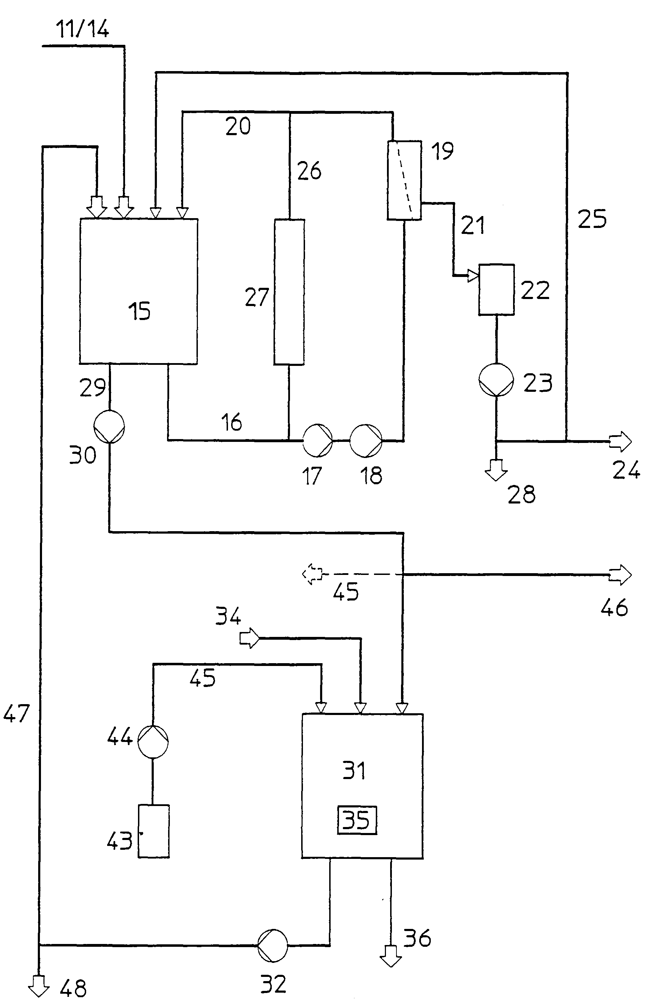

Weitere Merkmale, Einzelheiten und Vorteile der Erfindung ergeben sich aus der folgenden Beschreibung eines Ausführungsbeispiels, in der die Erfindung unter Bezugnahme auf die Zeichnung näher erläutert ist. Diese zeigt eine schematische Darstellung einer Vorrichtung zur Durchführung des erfindungsgemäßen Verfahrens mit einer zur Abtrennung und Aufkonzentration der Inhaltsstoffe des Abwassers dienenden Filtereinrichtung und einer zur physikalischen und/oder chemischen Behandlung des Konzentrats dienenden Einrichtung.

Wie aus der einzigen Figur der Zeichnung hervorgeht, wird das für die Behandlung vorgesehene Abwasser in einer Nanofiltrationsstufe entweder als biologisch vorbehandeltes Abwasser 11 oder als völlig unbehandeltes Abwasser 14 einer Behandlung zugeführt.

Das biologisch vorbehandelte 11 bzw. unbehandelte 14 Abwasser wird zunächst in eine Filtrationsvorlage 15 geleitet, in der eine Aufkonzentrierung dadurch erfolgt, daß ihr Inhalt 16 über eine Vordruckpumpe 17 und eine Filtrationspumpe 18 dem Eingang einer Nanofiltrationseinrichtung 19 zugeführt wird. Die Nanofiltrationseinrichtung 19 enthält eine semipermeable Membran, die so beschaffen ist, daß sie nur für Salze weitgehend durchlässig ist. Die Nanofiltrationseinrichtung 19 ist beispielsweise so beschaffen, daß im Abwasser enthaltenes NaCl zu 30 bis 90 % zurückgehalten wird. Das Retentat 20 der Nanofiltrationseinrichtung 19 wird in die Filtrationsvorlage 15 zurückgespeist, wodurch ein die Nanofiltrationseinrichtung 19 und die Filtrationsvorlage 15 enthaltender Filterkreislauf gebildet ist.

Auf diese Weise werden in der Nanofiltrationseinrichtung 19 Inhaltsstoffe im Retentatstrom 20 zurückgehalten und aufkonzentriert, während das gereinigte Permeat 21 über eine Permeatvorlage 22 gesammelt wird. Entsprechend den Anforderungen wird der Permeatstrom mittels einer Permeatpumpe 23 und Ventilregelungen unterschiedlich geschaltet.

Entspricht das Permeat den Reinigungsanforderungen, so kann es aus der Anlage als gereinigtes Abwasser 24 abgeleitet werden. Da die Permeatleistung so ausgelegt ist, daß mehr Permeat 21 gebildet als der Anlage als Zulauf 11 bzw. 14 zugeführt wird, muß aus betrieblichen Gründen der Permeatüberschuß 25 in die Filtrationsvorlage 15 zurückgeführt werden. Ist in der Filtrationsvorlage 15 das Aufkonzentrierungsziel erreicht, welches beispielsweise kontinuierlich über Leitfähigkeits-, Trübungsmessung oder mittels einer Autoanalysatoreinrichtung kontrolliert werden kann, so wird das Konzentrat entweder diskontinuierlich bzw. chargenweise oder ein Teilstrom kontinuierlich als Konzentrat 29 mittels einer Konzentratpumpe 30 einer chemischen und/oder physikalischen Behandlungsstufe zugeführt.

Fällt die Filterleistung der Nanofiltrationseinrichtung 19 ab, so kann mittels eines Spülkreislaufs 26, der von einer Spülvorlage 27 aus mit Wasser oder Permeat, das mit Reinigungsmitteln versetzt ist, versorgt wird, die Filtereinrichtung durch entsprechende Ventilsteuerung wieder freigespült werden.

Entspricht das Permeat 24 nicht den Reinigungsanforderungen, so kann der Ablauf 28 der Nanofiltrationsstufe einer weiteren Nanofiltrationsstufe zugeführt werden.

Die Nanofiltrationseinrichtung 19 ist für das erfindungsgemäße Verfahren z. B. durch Nanofilterstufen so ausgebildet, daß ein nahezu vollständiger Rückhalt aller relevanten Inhaltsstoffe erreicht wird, so daß mit dem behandelten Abwasser lediglich niedermolekular gelöste Inhaltsstoffe, vor allem Salze, ausgetragen werden.

Die Konzentratpumpe 30 fördert das Konzentrat 29 in einen Reaktionsbehälter 31 der zur physikalischen und/oder chemischen bzw. ionenselektiven Behandlung dienenden Einrichtung. Am Reaktionsbehälter 31 ist eine Chemikalienpumpe 44 über eine Chemikalienleitung 45 angeschlossen, so daß aus einer Chemikalienzuführungseinrichtung 43 Flockungs- oder Fällungschemikalien oder andere Mittel zur chemischen oder physikalischen Behandlung des Konzentrats 29 zugeführt werden können. Als solche Stoffe kommen insbesondere übliche Flockungs- und Fällungsmittel, Adsorptionsmittel wie Aktivkohle, Bentonit, Ionenaustauschharze oder ähnliches in Frage. Für eine der Oxidation des Konzentrats 29 dienende Behandlung können Oxidationsmittel wie Ozon, H₂O₂ und dgl. eingesetzt werden. Ferner kann die Oxidation durch UV-Einwirkung oder durch Elektrolyse erfolgen. Solche Chemikalien oder Behandlungsmittel können auch über eine Zugabeeinrichtung 34 in den Reaktionsbehälter 31 zugeführt werden. Durch die genannten Stoffe lassen sich adsorbierbare persistente und ionenselektive Stoffe adsorbieren, in eine abscheidbare Form bringen und entnehmen, so daß das von schädlichen Stoffen befreite Konzentrat 47 von einem Ausgang des Reaktionsbehälters 31 mit einer Beschickungspumpe 32 in die Filtrationsvorlage 15 zugegeben werden kann. Der Reaktionsbehälter 31 kann hierzu mit einem Rührwerk 35 umgewälzt und die adsorbierten oder chemisch gebundenen Inhaltsstoffe anschließend in durch Absetzen oder Filtration aufkonzentrierter Form aus dem System ausgetragen 36 werden.

Im Falle einer nur teilweisen Rückführung des behandelten Konzentrats 47 in den Filterkreislauf kann ein Teilstrom des unbehandelten Konzentrates 29 direkt über eine Entnahmeeinrichtung 45, 46 ausgeschleust werden oder aber nach chemischer und/oder physikalischer bzw. ionenselektiver Behandlung aus der Anlage entnommen werden 48.

Bei kontinuierlichem Betrieb kann das in der zur physikalischen und/oder chemischen Behandlung dienenden Einrichtung behandelte Konzentrat 47 über die Beschickungspumpe 32 in den die Membran- oder Nanofiltereinrichtung aufweisenden Filterkreislauf zurückgeführt werden. Auf diese Weise können die Behandlungsstufen zu einem quasi-geschlossenen Kreislauf geschlossen werden, in dem eine kontinuierliche Behandlung des zu reinigenden Abwassers erfolgt, das bei 11/14 zugeführt wird.

Die sich bei dieser kontinuierlichen Behandlung ergebenden Produkte werden in der jeweiligen Behandlungsstufe abgegeben, nämlich das gereinigte Abwasser aus den Nanofiltrationsstufen bei 24 bzw. 28 sowie das chemische und/oder physikalisch bzw. ionenselektiv behandelte Konzentrat bei 36, wobei dies jedoch im einzelnen vom gewählten Verfahrensablauf abhängig ist.

## Patentansprüche

1. Verfahren zur Reinigung von Abwasser, bei dem das Abwasser (11, 14) in einen Kreislauf einer Filtereinrichtung (19) eingespeist wird, in dem das Retentat (20) der Filtereinrichtung (19) zu deren Eingang zurückgeführt und dadurch in diesem Filterkreislauf ein Konzentrat eingestellt wird, und bei dem aus dem Filterkreislauf Konzentrat (29) entnommen sowie einer zur physikalischen und/oder chemischen Behandlung dienenden Einrichtung (31) zugeführt wird, dadurch gekennzeichnet, daß mindestens ein Teil des behandelten Konzentrats (47) aus der zur physikalischen und/oder chemischen Behandlung dienenden Einrichtung (31) in den Filterkreislauf zurückgespeist wird.

2. Verfahren nach Anspruch 1, dadurch gekennzeichnet, daß in der zur physikalischen und/oder chemischen Behandlung dienenden Einrichtung (31) ein Teil des Konzentrats in eine abscheidbare Form überführt und ausgetragen (36) wird.

3. Verfahren nach Anspruch 2, dadurch gekennzeichnet, daß der Abscheidungswirkungsgrad der zur physikalischen und/oder chemischen Behandlung dienenden Einrichtung (31) derart eingestellt wird, daß durch den zurückgespeisten Teil (47) der Konzentrationsgrad im Filterkreislauf einen gewünschten Wert nicht überschreitet.

4. Verfahren nach einem der Ansprüche 1 bis 3, dadurch gekennzeichnet, daß die Menge des in den Filterkreislauf zurückgespeisten Teils (47) derart eingestellt wird, daß durch ihn der Konzentrationsgrad im Filterkreislauf einen gewünschten Wert nicht überschreitet.

5. Verfahren nach einem der Ansprüche 1 bis 4, dadurch gekennzeichnet, daß die Filtereinrichtung (19) eine Membranfiltereinrichtung ist.

6. Verfahren nach Anspruch 5, dadurch gekennzeichnet, daß die Filtereinrichtung (19) eine Nanofiltereinrichtung ist.

7. Verfahren nach Anspruch 6, dadurch gekennzeichnet, daß die Nanofiltereinrichtung einen Rückhaltegrad für im Abwasser gelöstes NaCl von 30 bis 70 % aufweist.

8. Verfahren nach Anspruch 6, dadurch gekennzeichnet, daß die Nanofiltereinrichtung einen Rückhaltegrad für im Abwasser gelöstes NaCl von 50 bis 90 % aufweist.

9. Verfahren nach Anspruch 6, dadurch gekennzeichnet, daß die Nanofiltereinrichtung einen Rückhaltegrad für im Abwasser gelöstes NaCl von 10 bis 30 % aufweist.

10. Verfahren nach einem der Ansprüche 1 bis 7, dadurch gekennzeichnet, daß das Konzentrat (29) in der zur physikalischen und/oder chemischen Behandlung dienenden Einrichtung (31) mit einem Adsorptionsmittel und/oder einem Oxidationsmittel und/oder einem Flockungsmittel und/oder einem Fällungsmittel und/oder einem Ionenaustauschmittel behandelt wird.

11. Verfahren nach einem der Ansprüche 1 bis 10, dadurch gekennzeichnet, daß die Einstellung des Konzentrats im Filterkreislauf und die physikalische und/oder chemische Behandlung des aus dem Filterkreislauf entnommenen Konzentrats (29) diskontinuierlich ausgeführt werden.

12. Verfahren nach einem der Ansprüche 1 bis 10, dadurch gekennzeichnet, daß die Einstellung des Konzentrats im Filterkreislauf und die physikalische und/oder chemische Behandlung des aus dem Filterkreislauf entnommenen Konzentrats (29) kontinuierlich ausgeführt werden.

13. Verfahren nach einem der Ansprüche 1 bis 12, dadurch gekennzeichnet, daß die Filtereinrichtung (19) in Intervallen einer ihrer Regenerierung dienenden Spülung (26, 27) unterzogen wird.

14. Vorrichtung zur Reinigung von Abwasser mit einer Filtereinrichtung (19), an die ein der Rückführung ihres Retentats zu ihrem Eingang und dadurch zur Einstellung eines Konzentrats dienender Filterkreislauf angeschlossen ist, in den das Abwasser (11, 14) eingespeist wird, und einer zur physikalischen und/oder chemischen Behandlung dienenden Einrichtung (31), die mit einem Eingang an den Filterkreislauf angeschlossen ist, dadurch gekennzeichnet, daß ein mindestens einen Teil des behandelten Konzentrats (47) abführender Ausgang der zur physikalischen und/oder chemischen Behandlung dienenden Einrichtung (31) an den Filterkreislauf angeschlossen ist.

15. Vorrichtung nach Anspruch 14, dadurch gekennzeichnet, daß der Filterkreislauf einen mit einem Eingang an den das Retentat (20) liefernden Ausgang der Filtereinrichtung (19) und mit einem Ausgang an deren Eingang angeschlossenen Filtrationsvorlagebehälter (15) aufweist, an den ferner eingangsseitig der mindestens einen Teil des behandelten Konzentrats (47) abführende Ausgang der der physikalischen und/oder chemischen Behandlung dienenden Einrichtung (31) sowie ein Zulauf für das zu behandelnde Abwasser (11, 14) und ausgangsseitig der Eingang der der physikalischen und/oder chemischen Behandlung dienenden Einrichtung (31) angeschlossen ist.

16. Vorrichtung nach Anspruch 14 oder 15, dadurch gekennzeichnet, daß die Filtereinrichtung (19) eine Membranfiltereinrichtung, vorzugsweise eine Nanofiltereinrichtung, ist.

17. Vorrichtung nach einem der Ansprüche 14 bis 16, dadurch gekennzeichnet, daß die zur physikalischen und/oder chemischen Behandlung dienende Einrichtung (31) eine zur Abtrennung von Inhaltsstoffen des Konzentrats dienende Adsorptionseinrichtung aufweist.

18. Vorrichtung nach einem der Ansprüche 14 bis 17, dadurch gekennzeichnet, daß die zur physikalischen und/oder chemischen Behandlung dienende Einrichtung (31) eine zur Abtrennung von Inhaltsstoffen des Konzentrats dienende Flockungs- und/oder Fällungseinrichtung aufweist.

19. Vorrichtung nach einem der Ansprüche 14 bis 18, dadurch gekennzeichnet, daß die zur physikalischen und/oder chemischen Behandlung dienende Einrichtung (31) einen zur Abtrennung von Inhaltsstoffen des Konzentrats dienenden Ionenaustauscher aufweist.

20. Vorrichtung nach einem der Ansprüche 14 bis 19, dadurch gekennzeichnet, daß die zur physikalischen und/oder chemischen Behandlung dienende Einrichtung (31) eine zur Umsetzung von Inhaltsstoffen des Konzentrats dienende Oxidationseinrichtung aufweist.
